# EUROPEAN PATENT APPLICATION

(11) **EP 1 715 434 A1**
(43) Date of publication of application: **25.10.2006**
(21) Application number: 05008920.0
(22) Date of filing: 22.04.2005
(51) Int. Cl.: G06F 17/50

(54) **Circuit design platform**

(71) Applicant: Wen, Kuei-Ann, HsinChu (TW); Wuen, Wen-Shen, HsinChu (TW)
(72) Inventor: Wen, Kuei-Ann, HsinChu (TW); Wuen, Wen-Shen, HsinChu (TW)
(74) Representative: Winter, Brandl, Fürniss, Hübner Röss, Kaiser, Polte Partnerschaft Patent- und Rechtsanwaltskanzlei

(57) **Abstract**

The circuit design platform of this invention comprises: a portal provided with a network platform to install functional modules and to allow users to utilize said functional modules after login; a circuit design tool module to connect at least one circuit design software and to generate a circuit design descriptive data file; a circuit design database connection module to connect at least one circuit design database; a circuit design simulation module to connect at least one circuit design simulation software; an integrated circuit manufacture connection module to connect website of at least one integrated circuit manufacturer and to provide at least one integrated circuit processing attributes analysis tool to suggest suited manufacture process; a circuit test connection module to connect at least one circuit test service provider to conduct online or offline tests; and a management module for management and fee calculation of access of the above functional modules.

## Description

### FIELD OF THE INVENTION

The present invention relates to a circuit design platform, especially to a system of integrated working platform provided with all kinds of tools allowing circuit designers to analyze, design, simulate, verify and manufacture integrated circuits in the same platform.

### BACKGROUND OF THE INVENTION

Along with the highly integration of the integrated circuit, to include millions of transistors in one integrated circuit has been a known art. Under such technical trend and such business practice, all steps and aspects involved in the design of integrated circuit shall be assisted by professionals using professional tools. The biological environment of the circuit design industry has thus changed.

In other words, in the early days a circuit designer shall be equipped with a semiconductor factory, so that integrated circuits designed by the designer may be verified and manufactured in the semiconductor factory. However, the raise of professional semiconductor fabs and the development of the semiconductor technology towards the submicron level have broken this requirement. Almost no circuit design houses have their own semiconductor factory. In addition to this, in the early stage of the design of integrated circuits, the circuits or the designs need to be analyzed, such that structure of the integrated circuit so designed may be determined. In the designing stage of the circuit, electronic design automation (EDA) tools shall be used to realize the ideas of the designers. The circuits so designed need to be simulated, debugged and verified, using professional tools. The circuit design as completed are provided to semiconductor factories for production. The integrated circuits so manufactured shall be cut, packaged and tested. In addition, during the design stage, if not all the circuits are designed by the designers, it will be necessary to license useful circuit designs from third parties. All these required tools, services and technologies shall be provided by professional service/technology providers. There is no such service or technology provider that can provide total solutions in helping circuit designers to complete the design and manufacture of integrated circuits designed by them.

It is thus necessary to provide an integrated circuit design platform to integrate all kinds of necessary tools and services in the design and manufacture of integrated circuits to facilitate the circuit designers to complete their circuit design and manufacture in one single platform.

It is also necessary to provide a circuit design platform to integrate all kinds of resources that a circuit designer may use during the design and manufacture of integrated circuits, such that human resources, time and cost consumed in the design and manufacture of integrated circuits may be reduced.

### OBJECTIVES OF THE INVENTION

The objective of this invention is to provide an integrated circuit design platform to integrate all kinds of necessary tools and services in the design and manufacture of integrated circuits to facilitate the circuit designers to complete their circuit design and manufacture in one single platform.

Another objective of this invention is to provide a circuit design platform to integrate all kinds of resources that a circuit designer may use during the design and manufacture of integrated circuits, such that human resources, time and cost consumed in the design and manufacture of integrated circuits may be reduced.

### SUMMARY OF THE INVENTION

According to the present invention, the circuit design platform comprises:
a circuit design database connection module to connect at least one circuit design database comprising a plurality of component design data files;
a circuit design simulation module to connect at least one circuit design simulation software to allow users to inspect features of and to simulate circuit behaviors of particular circuit designs;
an integrated circuit manufacture connection module to connect website of at least one integrated circuit manufacturer and to provide at least one integrated circuit processing attributes analysis tool to analyze attributes of manufacture process suited for particular circuit design;
a circuit test connection module to connect website of at least one circuit test service provider to conduct online or offline tests of integrated circuit comprising particular circuit design;
a portal providing a network platform mechanism to connect to functional modules including said circuit design tool module, said circuit design database connection module, said circuit design simulation module, said integrated circuit manufacture connection module and said circuit test connection module; and
a management module for management and fee calculation of access of said functional modules.

The circuit design platform of this invention may further comprises a plurality of software design, simulation, test and even sales, installation and after service tool modules and other database connection modules to allow circuit designers to generate necessary systematic software or application software during the design and manufacture of the integrated circuit so designed.

These and other objectives and advantages of this invention may be clearly understood from the detailed description by referring to the following drawings.

### BRIEF DESCRIPTION OF THE DRAWINGS

Fig. 1 shows the systematic diagram of the circuit design platform of this invention.
Fig. 2 shows the systematic diagram of the circuit design tool module of the present invention.
Fig 3 shows the systematic diagram of the circuit component intellectual property transaction system of the present invention.

### DETAILED DESCRIPTION OF THE INVENTION

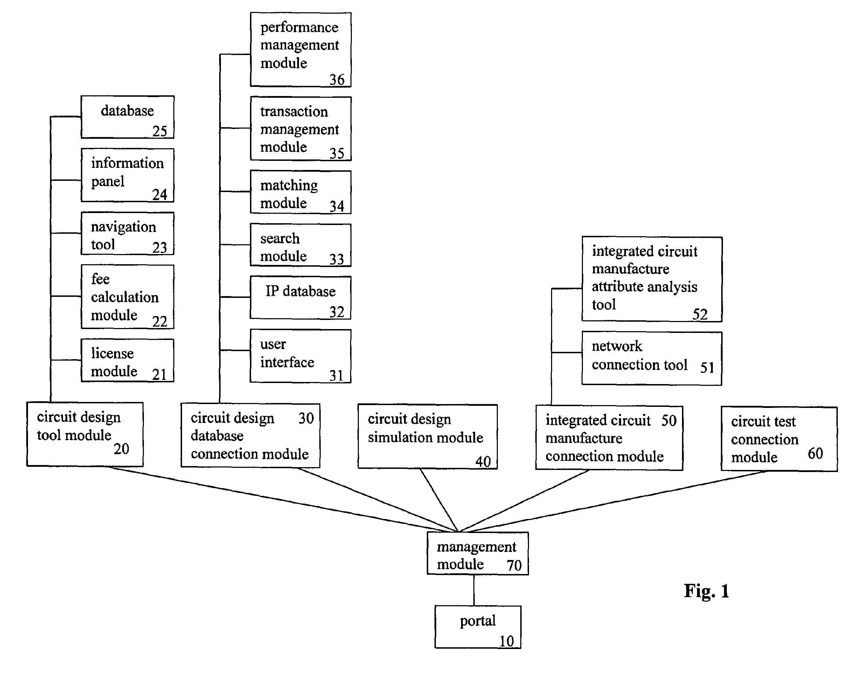

Fig. 1 shows the systematic diagram of the circuit design platform of this invention. As shown in this figure, the circuit design platform of this invention comprises: a portal 10 to provide a network platform mechanism to be connected to functional modules including the following circuit design tool module 20, circuit design database connection module 30; circuit design simulation module 40, integrated circuit manufacture connection module 50 and circuit test connection module 60. The circuit design platform 10 may further include other functional modules to integrate all necessary functions from design, simulation, manufacture, test, package and other required functions into the platform. The circuit design platform of this invention may further comprises a plurality of software design, simulation, test and even sales, installation and after service tool modules and other database connection modules to allow circuit designers to generate necessary systematic software or application software during the design and manufacture of the integrated circuit so designed.

When a user accesses the invented circuit design platform through the portal 10, the user may complete all works from research, design to manufacture and test of integrated circuit in one platform. In addition, the circuit design platform may further comprise a management module 70 for management and fee calculation of access of these functional modules, connections with external systems and websites through the portal 10. As the design of the portal 10 and the management module 70 belongs to the known art, those skilled in the art may realize these two modules using the known technology. Detailed description thereof is thus omitted.

The circuit design database connection module 20 of this invention provides a network connection tool to connect a plurality of electronic design application (EDA) tools, so that users may access to those circuit design tools through the circuit design tool module 20, to conduct designs of desired integrated circuits. The circuit design tools may be design tools already installed in the local computer or circuit design tools in a remote computer accessible from the local computer. Generally speaking, the bandwidth necessary in the transmission of the design data could be too wide, if the circuit design tools are access from remote; these circuit design tools are preferably locally installed. Of course, other arrangements of the circuit design tools may also be used in this invention.

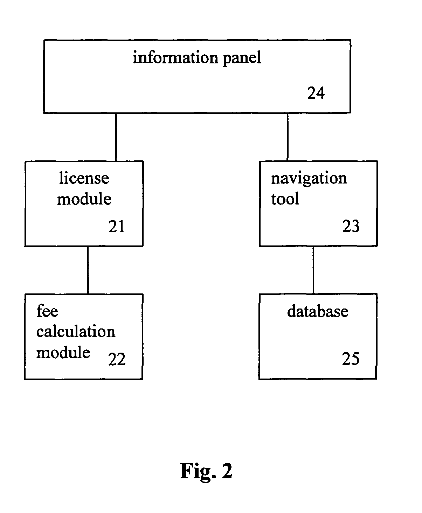

As to examples of applicable circuit design tools, they may be commercially available tools or locally developed tools. Popular circuit design tools that may be used in this invention include Virtuoso, Cadence, ADVance MS, Mentor Graphics etc. Fig. 2 shows the systematic diagram of the circuit design tool module 20 of the present invention. As shown in this figure, the circuit design tool module 20 comprises a license module 21, to verify whether the user is authorized to use the circuit design tools as selected and to provide an authorization tool to allow the user to obtain necessary authorization, if result of the above verification is negative; a fee calculation module 22 to calculate time duration or other fee collection factors for user's access of particular circuit design tools and to calculate collectable fees accordingly; a navigation tool 23 to provide navigation services among available circuit design tools according to requirements input by the user, so to allow the user to access to suited circuit design tools easily; and an information panel 24 to display and to allow input of functional requirements and information relating to circuit design and processes thereafter. Information to be provided in the information panel 24 may include names of semiconductor factories, packaging companies, testing companies etc. as they are available for service. Users may review information regarding services provided by these service providers and input factors relating to requirement and other useful data through the information panel 24. The system may use the input requirements and other useful data to provide suggestions and show the suggestions in the information panel 24. When the suggestions are displayed, the information panel 24 may further provide linkages to the website or intranet of the suggested service providers or other related networks.

All the above-said modules may be realized by those skilled in the art, using the known technology in the fields of website design, networking communication system and database management. In the circuit design tool module 20 of this invention, an independent database 25 may be provided to store information regarding license, authorization, fee collection, navigation, linkage etc. Information stored in the independent database 25 may also be used by other functional modules or provided to users for online searching.

The circuit design database connection module 30 allows users to connect to suited circuit design database according to particular requirements of particular users. In the circuit design database provided is a plurality of circuit component design data. The circuit design database may be a local database stored in the local server or a remote database accessible through the internet. A circuit design database suited in the present invention may be circuit component intellectual property (IP) transaction system. Such an IP transaction system provides a user interface allowing users to input particular requirements of circuit designed to be used, whereby information of circuit designs satisfying such requirements will be displayed in the user interface. If the user clicks on any of the displayed circuit design, an IP license agreement will be automatically closed whereby the user may include the licensed circuit design into the circuit being designed or otherwise utilize the licensed circuit design according to the license agreement, after the agreed license fee or royalty fee is paid. The way the user include such circuit design into the circuit under design could be just to include the circuit design information of the particular component into the circuit design tools connected by the circuit design tool module 20.

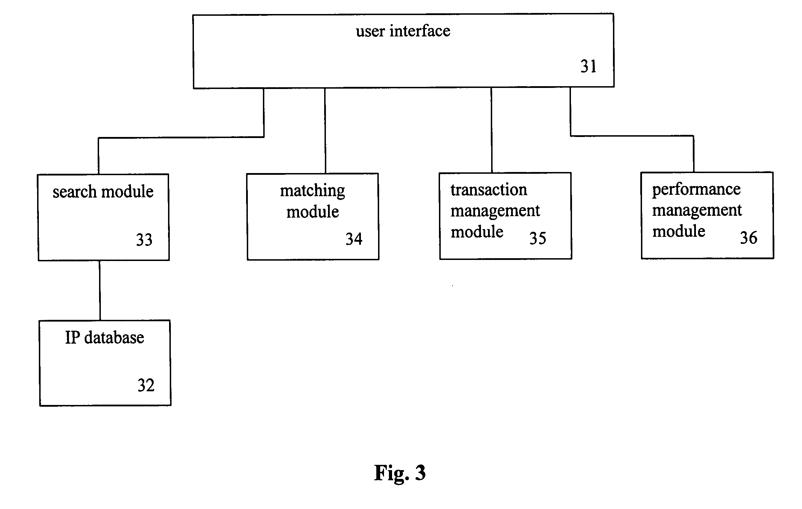

Fig 3 shows the systematic diagram of the circuit component intellectual property transaction system of the present invention. As shown in this figure, the circuit component IP transaction system of this invention includes a user interface 31 to allow users to conduct online IP transaction; wherein said user-interface may be provided in the circuit design database connection module 30 or be accessed through internet linkage; a circuit component IP database 32, including descriptive information of a variety of circuit components, such as transistor, capacitor, inductor, etc., with feature descriptions such as size, working voltage, working frequency, manufacture process etc. being attached to the descriptive information, so to enable users searches of applicable components to be included into the integrated circuit; wherein each group of descriptive information is connected to a license information file in which information of licensor and applicable licensing terms and conditions are included; a search module 33 to allow users to input search parameters such as keywords, specification, function, classification, required manufacture process for particular components and to conduct searches in the database 32 for candidate circuit component IP's that satisfy the search parameters; a matching module 34 to match requests from users and applicable circuit component IP's according to description regarding features and functional requirements or even expected terms and conditions for license and to provide the matched IP's for users' use; a transaction management module 35 to generate a transaction record according to requirements and conditions input by particular user and terms and conditions set by relative licensor after a matched transaction is accepted by both the requested user and the licensor; said transaction module 35 being able to provide further functions in verifying credit lines and past transaction history of particular users and /or licensors to be used as reference by parties of the transaction and the system; and a performance management module 36 to monitor performance of parties to a transaction after said transaction is recorded, including transfer of content or representative information of a licensed circuit component IP to designated semiconductor factory, calculation and collection of license fee according to factual descriptive information such as quantity, term, type of utilization of the licensed IP's reported by user or semiconductor factory and to inspect misuse of licensed IP's.

The operation of the circuit component IP transaction system 30 is established based on the modelization of transactional conditions. As a result, it is very important to list all related transactional conditions and to define the "similarity" of transactional conditions, according to requirements by particular users, special features of particular circuit components in both the technical and the business aspects. With such definitional of similarity, matching of license transaction is thus made possible. As related technologies are already used in a variety of commercially available business models, detailed description thereof is thus omitted. Of course, if a circuit design database is installed in the circuit design database connection module 30 of this invention, desired circuit component IP's may be easily included into the integrated circuit of the user without going through the IP transaction system.

The functions of the circuit design simulation module 40 include allowing designers of particular circuit designs to simulate the behavior of the circuit so designed. The circuit design simulation module 40 is connectable to any commercially available circuit simulation tool, or to any simulation tools particularly designed for special purposes. The circuit design simulation module 40 allows the user to subject particular circuit design information file to a simulation tool, after the user have selected the particular simulation tool. The behavior of the circuit so designed is thus simulated and results of the simulation are generated for the user to verify or correct the designed circuit. The circuit design simulation module 40 further provides a user interface, through which the user may input particular circuit design information file and simulation conditions, such as maximum die size, positions of input/output ports and other special requirements, so to enable the post layout simulations or other simulations. When the simulation is completed, the results are output to the user and service fees are collected. As described above, the circuit design simulation module 40 of this invention may be realized by those skilled in the art by taking the above description for reference. In addition, the circuit design simulation module 40 may further provide a navigation function, so to help the users to allocate suited simulation tools according to the requirements and the features of the circuit so designed.

The integrated circuit manufacture connection module 50 of this invention comprises a network connection tool 51 and an integrated circuit manufacture attribute analysis tool 52. Since it is possible for customers of semiconductor factory to order a lot of integrate circuit products by submitting the circuit design information to the semiconductor factory through the networking system, such as a portal, and in the network system the customers are allowed to monitor the manufacture of the ordered integrated circuit products, in this invention only a network connection tool 51 is provided to connect with the portals of a plurality of semiconductor factories. The network connection tool 51 is equipped with all kinds of necessary communications hardware and software to allow users to obtain limited authorizations and limited authentications in order to access to the information system of the semiconductor factories. As soon as a user is allowed to access the network system of the semiconductor factory through the integrated circuit manufacture connection module 50, the user is given the right to use limited resources in the network system of the semiconductor factory, just as what is given to ordinary customers of the semiconductor factory.

The integrated circuit manufacture attribute analysis tool 52 accepts information input by users regarding descriptions of requirements relating to circuit, integrated circuit and manufacture process, such as die size, tooling form, number of layer of mask, electronic design protocol, regulations in process etc., analyzes the input information and provides suggestions regarding candidate semiconductor factories and applicable manufacture processes. After a user has input the required information, the integrated circuit manufacture attribute analysis tool 52 will automatically analyze these attributes and generate proper suggestions accordingly. The user may then select the suggested service providers and/or manufacture processes, thereby the network connection tool 51 will connect websites of the selected factories to enquire, make reservations and put purchase orders to the semiconductor factories. Such a module may be realized by those skilled in the art using a database management tool by taking the above description into consideration. Such a module provides proper attribute analysis tools and communications and negotiation functions as described above. In addition, the network connection tool 51 may further provide automated monitoring functions, such that information fed back from the semiconductor factories may be grasped automatically in order to keep records or to generate alerts to related users.

Functions of the circuit test connection module 60 include facilitating the communications between users and particular circuit test service providers' websites or portals. Similar to what was described above, the circuit test connection module provides a navigation tool to guide the user to search suited circuit test service providers. Users are invited to input all kinds of conditions and requirements relating to tests of integrated circuits containing circuit designs completed in the platform, such as types of test, die size, test and application conditions etc. The circuit test connection module 60 then analyzes and generates candidates of suited circuit test service providers. Users are then allowed to select particular service providers by clicking in the user interface to conduct enquiry, reservation and order when the users are connected to the websites or portals of the service providers. After an order is made effective, authorization information is generated and is transmitted to the related semiconductor factories, which will then ship the related integrated circuit products as they are manufactured, to the selected circuit test service providers. The test service provider then tests the integrated circuit products and information of the test results will be transmitted to the circuit test connection module 60 or to the semiconductor factory. The circuit test connection module 60 will connect the website or portal of the circuit test service provider or the semiconductor factory to obtain desired information such test results. The circuit test connection module 60 may also connect the semiconductor factory to obtain information such as wafer acceptance test reports etc. and forward the information to the circuit test service provider, to facilitate the test services. In addition, the circuit test service connection module 60 may also receive feedbacks from the circuit test service providers so to monitor the test service from time to time.

The circuit design platform of this invention may further comprise additional chip package connection module to connect websites or portals of chip package service providers and other service providers relating to design, manufacture, test etc. A navigation tool may be provided in respective connection modules in order to guide the users to select suited service providers, to obtain services or information online or offline. All these connection and navigation tools may be realized by those skilled in the art by reference to the description of this invention.

In the circuit design platform of this invention, a variety of software design, simulation, test and even sales, installation and after service tools and modules may also be provided. These tools and modules enable users to design needed system software or application software during the design activities of the circuits. The structure of these tools and modules will be similar to those tools, modules and connection modules relating to circuit design, as described above. These and other may be realized by those skilled in the art by referring to the above descriptions. Detailed description thereof is thus omitted.

As described above, the circuit design platform of this invention provides all kinds of networked tools, resources and connection modules that a circuit designer may need in all stages of the circuit design activities, including from planning, design to manufacture, cutting, packaging and testing. When using the circuit design platform of this invention, users may use all kinds of installed or connectable tools and resources to design, simulate, produce and test the integrated circuit products they design. In addition, the circuit design database connection module 30 provides users convenient and speedy channels to obtain circuit design IP's. Time lags in the design and production of integrated circuits may thus be shortened. The management module 70 of this invention administrates the services of the invented platform and collects fees for the service so provided. Circuit designers do not need to personally investigate, study, test and purchase the desired tools and resources before they start to design their circuits. Circuit design activities are made easy and less costly. This invention integrated the total solutions for circuit, and even software, design, production and test into one single platform.

As the present invention has been shown and described with reference to preferred embodiments thereof, those skilled in the art will recognize that the above and other changes may be made therein without departing form the spirit and scope of the invention.

## Claims

1. A circuit design platform, comprising:
a portal provided with a network platform to install functional modules and to allow users to utilize said functional modules after login;
a circuit design tool module provided with a network connection tool to connect at least one circuit design software to be used in the design of circuitry and to generate a circuit design descriptive data file;
a circuit design database connection module provided with a network connection tool to connect at least one circuit design database comprising a plurality of circuit design data files;
a circuit design simulation module provided with a network connection tool to connect at least one circuit design simulation software to allow users to inspect features of and to simulate circuit behaviors of particular circuit designs;
an integrated circuit manufacture connection module provided with a network connection tool to connect website of at least one integrated circuit manufacturer and to provide at least one integrated circuit manufacture attributes analysis tool to analyze attributes of manufacture process suited for particular circuit design;
a circuit test connection module provided with network connection tool to connect website of at least one circuit test service provider to conduct online or offline tests of integrated circuit comprising particular circuit design; and
a management module for management and fee calculation of access of said functional modules.

2. The circuit design platform according to claim 1, wherein said circuit design tool is locally installed.

3. The circuit design platform according to claim 1, wherein said circuit design tool module comprises:
a license module to verify whether a user is authorized to use circuit design tools as selected and to provide an authorization tool to allow user to obtain necessary authorization, if result of the above verification is negative;
a fee calculation module to calculate time duration or other fee collection factors for user's access of particular circuit design tools and to calculate collectable fees accordingly;
a navigation tool to provide navigation services among available circuit design tools according to requirements input by user; and
an information panel to display and to allow input of functional requirements and information relating to circuit design and processes thereafter.

4. The circuit design platform according to claim 3, wherein said navigation tool superlinks to websites of internet service providers or networks relating to desired services as shown in said information panel according to selection made by user.

5. The circuit design platform according to claim 1, wherein said circuit design tool module provides an independent database to store data necessary in said license, said fee calculation, said navigation and said linkage.

6. The circuit design platform according to claim 1, wherein said circuit design database connection module links to a circuit component intellectual property transaction system according to particular requirements input by user.

7. The circuit design platform according to claim 6, wherein said circuit component intellectual property transaction system automatically generates an intellectual property license contract to provide intellectual property data of selected circuit design to user according to requirements and selections input by said user.

8. The circuit design platform according to claim 1, wherein said circuit component intellectual property transaction system comprises:
a user interface to allow users to conduct online intellectual property transaction;
a circuit component intellectual property database to include descriptive information of a variety of circuit components, attached with feature descriptions for search purposes, wherein each group of descriptive information is connected to a license information file provided with information of licensor and applicable licensing terms and conditions;
a search module to allow users to input search parameters and to conduct searches in said circuit component intellectual property database for candidates circuit component intellectual properties;
a matching module to match feature descriptions and/or licensing terms and conditions of user's input with that of candidate circuit component intellectual properties and to provide matched circuit component intellectual properties for user's selection;
a transaction management module to generate a transaction record according to terms and conditions input by user and by corresponding licensor after a match is accepted by both said user and licensor; and
a performance management module to transfer content or representative data of a licensed circuit component and to collect license fees.

9. The circuit design platform according to claim 1, wherein said circuit design database connection module connects a local circuit design database according to particular requirements input by user and automatically generates an intellectual property license contract to provide intellectual property data of selected circuit design to user.

10. The circuit design platform according to claim 1, wherein said circuit design simulation module provides a user interface to allow user to input circuit design data files and simulation conditions and to output results of simulations.

11. The circuit design platform according to claim 1, wherein said integrated circuit manufacture connection module comprises a network connection tool to connect portals of integrated circuit manufacturer; and an integrated circuit manufacture attribute analysis tool; wherein said network connection tool is provided with authorization tools to authenticate and to authorize users to access to networks of particular integrated circuit manufacturer and communication tools to conduct communications with said networks and wherein said integrated circuit manufacture attribute analysis tool generates information of suggested integrated circuit manufacturers according to requirements input by user.

12. The circuit design platform according to claim 11, wherein said network connection tool further provides a monitoring function to automatically obtain from time to time feedback information from integrated circuit manufacturers and establishes records of said feedback information or generates alerts to user, based on said feedback information.

13. The circuit design platform according to claim 1, wherein said circuit test connection module automatically generates a group of authorization information according to user's selection of test service provider to instruct corresponding integrated circuit manufacturer to ship designated integrated circuit products to selected test service providers.

14. The circuit design platform according to claim 13, wherein said circuit test connection module further automatically connects websites of said corresponding integrated circuit manufacturer and said selected test service provider such that feedback information from said integrated circuit manufacturer may be transferred to said selected test service provider.

15. The circuit design platform according to claim 13, wherein said circuit test connection module receives feedback information from said selected test service provider.

16. The circuit design platform according to claim 1, further comprising a packaging connection module to connect websites of integrated circuit packaging service providers.

17. The circuit design platform according to claim 1, further comprising a software design tool module, a software simulation tool module, software test tool module, a software sales tool module, an after service tool module and a database connection module to provide system software or application software necessary in the design of computer software.
